# EUROPEAN PATENT APPLICATION

(11) **EP 1 148 710 A2**
(43) Date of publication of application: **24.10.2001**
(21) Application number: 01109420.8
(22) Date of filing: 20.04.2001
(51) Int. Cl.: H04N 1/48

(54) **Color image pickup element, image reader using the pickup element, and image reading method**

(30) Priority: 20.04.2000 JP 2000119569
(71) Applicant: SEIKO EPSON CORPORATION, Shinjuku-ku Tokyo-to (JP)
(72) Inventor: Kanesaka, Yoshinori, Seiko Epson Corporation, Suwa-shi, Nagano (JP)
(74) Representative: HOFFMANN - EITLE

(57) **Abstract**

A color image pickup element (5) includes a group of image pickup elements for reading blue light, a group of image pickup elements for reading green light, and a group of image pickup elements for reading red light. The image pickup element groups further include first photoelectric transducer rows (51, 53, 55) and second photoelectric transducer rows (52, 54, 56). The first photoelectric transducer rows (51, 53, 55) and the second photoelectric transducer rows (52, 54, 56) are arranged such that respective image pickup elements are aligned with each other in the primary scanning section. By pixel data read by the first photoelectric transducer rows (51, 53, 55) and pixel data read by the second photoelectric transducer rows (52, 54, 56), pixel data pertaining to two pixels located at the same position on each line with reference to a primary scanning direction are averaged or added together. As a result, resolution of pixels is improved, and noise components of the pixels are diminished. Thus, a signal-to-noise ratio can be improved.

## Description

### BACKGROUND OF THE INVENTION

### 1. Field of the Invention

The present invention relates to a color image pickup element, an image reader using the color image pickup element, and an image reading method.

The present application is based on Japanese Patent Application No. 2000-119569, which is incorporated herein by reference.

### 2. Description of the Related Art

A related image reader comprises a carriage having a color image pickup element. The color image pickup element has three line sensors, such as CCDs, which comprise a plurality of linearly-arranged image pickup elements and read three primary colors, respectively. The carriage is moved in parallel with the plane of the original, thereby reading an image of the original.

For example, a flatbed image reader is provided with an original table which has a transparent plate, such as glass, and is placed on top of a box-shaped housing. A carriage which is moved in parallel with the original table by a drive device is disposed within the housing. A light source and the color image pickup element are mounted on the carriage. Exposing light from a light source is reflected from the surface of the original placed on the original table, and the thus-reflected light is gathered on the color image pickup element by a light-gathering lens.

In connection with such an image reader, in order to improve the reading resolution of a CCD with reference to a primary scanning direction in which image pickup elements serving as the CCD are arranged, the number of image pickup elements must be increased. However, when only the number of image pickup element is increased while the sizes of individual image pickup elements remain unchanged, a CCD eventually becomes bulky, and a rise in CCD costs arises. Further, the load imposed on the design of an optical system of the image reader is increased, which in turn increases manufacturing costs.

If the number of image pickup elements is increased while the elements are made smaller in size without upscaling of a CCD, the sensitivity of the CCD is in proportion to a light-receiving area. Hence, the amount of received light per unit pixel is diminished, thereby deteriorating the sensitivity of the CCD, a reading speed, and an signal-to-noise ratio. Moreover, miniaturization of image pickup elements poses limitations on manufacture.

As described in Unexamined Japanese Patent Publication No. Sho. 58-19081, a CCD image sensor comprises a first row of light sensors and a second row of light sensors which are offset from the respective light sensors of the first row by about half the width of a single light sensor. In this CCD image sensor, the light sensors of the first row and the light sensors of the second row are arranged adjacent to each other in a secondary scanning direction.

By the configuration of such a CCD image sensor having a plurality of rows of light sensors, a single line on an original is read by light sensors of the first row and light sensors of the second row. The CCD image sensor can increase reading resolution in the primary scanning direction to a value greater than that of a CCD image sensor having a single row of light sensors.

In accordance with the amount of incident light and a period of time during which electric charges are accumulated (simply called a "storage time"), outputs of image pickup elements serving as a CCD change. As the product of light quantity and storage time increases, outputs of the image pickup elements increase in proportion to a predetermined level. The image pickup elements are characterized in that outputs are saturated when having reached the predetermined level and do not increase beyond the predetermined level even when the amount of incident light is increased or the storage time of electric charges is increased. Further, outputs of the image pickup elements include an offset level stemming from a dark current. For this reason, the dynamic range of image pickup elements extends from an offset level to the predetermined level.

When an original of high quality is read through use of such an CCD image sensor, the CCD image sensor is constructed of Peltier elements and cooled, thereby diminishing a dark current and an offset level, which is a noise level. As a result, the dynamic range of outputs of the CCD image sensor can be expanded, and a signal-to-noise ratio can be improved, thereby enabling reading of high-quality images.

When a high-quality image is read by the above-described method, expensive components, such as Peltier elements, must be used, thereby complicating the CCD image scanner and adding to manufacturing costs.

### SUMMARY OF THE INVENTION

The present invention has been conceived to solve the problems set forth and is aimed at providing a color image pickup element of simple construction which reads a high-quality image without involvement of an increase in costs, and providing an image reader using the color image pickup element and an image reading method.

As recited in claim 1, according to a first aspect of the present invention, there is provided a color image pickup element comprising groups of image pickup elements provided for a plurality of colors, each image pickup element group including a plurality of image pickup elements linearly arranged in rows on a substrate,
characterized in that
a row of image pickup elements in each image pickup element group and another row of image pickup elements in the same image pickup element group are arranged such that respective image pickup elements match in position in a direction in which the image pickup elements are arranged.

Accordingly, pixel data―which pertain to a plurality of pixels located at the same position with reference to a direction in which image pickup elements the respective image pickup element groups are arranged ―――are subjected to addition or averaging. As a result, resolution of pixels is improved, and noise components of the pixels are diminished, thereby improving a signal-to-noise ratio. Consequently, picture quality can be improved by employment of a simple configuration without involvement of a rise in cost.

As recited in claim 2, according to a second aspect of the present invention, the color image pickup element of claim 1 is characterized in that the groups of image pickup elements are provided so as to correspond to a red color, a green color, and a blue color.

Hence, light reflected from an original can be resolved into the three primary colors.

As recited in claim 3, according to a third aspect of the present invention, there is provided an image reader characterized by comprising:
a color image pickup element according to claim 1 or 2;
a plurality of mirrors for reflecting light which has been emitted from a light source and reflected from or passed through the surface of an original; and
a light-gathering lens for gathering the light reflected from the mirrors on the color image pickup element.

Hence, the resolution of the image reader is improved, and noise components of the image reader can be improved. Further, a signal-to-noise ratio of the image reader can be improved.

As recited in claim 4, according to a fourth aspect of the present invention, the image reader of claim 3 is characterized by further comprising:
an analog-to-digital conversion section for subjecting to analog-to-digital conversion pixel output data from the color image pickup element;
pixel data storage means for storing the pixel data that have been subjected to analog-to-digital conversion by the analog-to-digital converter; and
averaging means for subjecting to averaging operation a plurality of pixel data sets which are stored in the pixel data storage means, have been read at different times from the same position with reference to a direction in which image pickup elements of the respective image pickup element rows are arranged, and outputs a result of averaging operation as one set of pixel data.

Accordingly, resolution of pixels are improved, and noise components of the pixels are diminished, thereby improving a signal-to-noise ratio. Consequently, picture quality can be improved by employment of a simple configuration without involvement of a rise in cost.

A region to be averaged corresponds to a mean value obtained by averaging the pixel data read by a plurality of photoelectric transducer rows. The resultant resolution becomes equal to reading resolution of a color image pickup element having a single row of image pickup elements in the primary scanning direction. Consequently, noise components can be diminished without involvement of a reduction in resolution of the image pickup element in the primary scanning direction.

As recited in claim 5, according to a fifth aspect of the present invention, the image reader of claim 3 is characterized by further comprising:
an analog-to-digital conversion section for subjecting to analog-to-digital conversion pixel output data from the color image pickup element;
pixel data storage means for storing the pixel data that have been subjected to analog-to-digital conversion by the analog-to-digital converter; and
addition means for subjecting to adding operation a plurality of pixel data sets which are stored in the pixel data storage means, have been read at different times from the same position with reference to a direction in which image pickup elements of the respective image pickup element rows are arranged, and outputs a result of adding operation as one set of pixel data.

Accordingly, resolution of pixels is improved, and noise components of the pixels are diminished, thereby improving a signal-to-noise ratio. Consequently, picture quality can be improved by employment of a simple configuration without involvement of a rise in cost.

A region to be averaged corresponds to a result of addition of the pixel data read by a plurality of photoelectric transducer rows. The resultant resolution becomes equal to reading resolution of a color image pickup element having a single row of image pickup elements in the primary scanning direction. Consequently, noise components can be diminished without involvement of a reduction in resolution of the image pickup element in the primary scanning direction.

As recited in claim 6, according to a sixth aspect of the present invention, there is provided an image reading method performed by the image reader recited in claim 3, which is characterized by comprising:
an analog-to-digital conversion step for subjecting to analog-to-digital conversion pixel data output from the color image pickup element;
a pixel data storage step for storing pixel data which have been subjected to analog-to-digital conversion by the analog-to-digital conversion section; and
an averaging step for subjecting to averaging operation a plurality of pixel data sets which are stored in the pixel data storage means, have been read at different times from the same position with reference to a direction in which image pickup elements of the respective image pickup element rows are arranged, and outputs a result of averaging operation as one set of pixel data.

Accordingly, resolution of pixels are improved, and noise components of the pixels are diminished, thereby improving a signal-to-noise ratio. Consequently, picture quality can be improved by employment of a simple configuration without involvement of a rise in cost.

A region to be averaged corresponds to a mean value obtained by averaging the pixel data read by a plurality of photoelectric transducer rows. The resultant resolution becomes equal to reading resolution of a color image pickup element having a single row of image pickup elements in the primary scanning direction. Consequently, noise components can be diminished without involvement of a reduction in resolution of the image pickup element in the primary scanning direction.

As recited in claim 7, according to a seventh aspect of the present invention, there is provided an image reading method performed by the image reader recited in claim 3, which is characterized by comprising:
an analog-to-digital conversion step for subjecting to analog-to-digital conversion pixel data output from the color image pickup element;
a pixel data storage step for storing pixel data which have been subjected to analog-to-digital conversion by the analog-to-digital conversion section; and
an addition step for subjecting to adding operation a plurality of pixel data sets which are stored in the pixel data storage means, have been read at different times from the same position with reference to a direction in which image pickup elements of the respective image pickup element rows are arranged, and outputs a result of adding operation as one set of pixel data.

Accordingly, resolution of pixels is improved, and noise components of the pixels are diminished, thereby improving a signal-to-noise ratio. Consequently, picture quality can be improved by employment of a simple configuration without involvement of a rise in cost.

A region to be averaged corresponds to a result of addition of the pixel data read by a plurality of photoelectric transducer rows. The resultant resolution becomes equal to reading resolution of a color image pickup element having a single row of image pickup elements in the primary scanning direction. Consequently, noise components can be diminished without involvement of a reduction in resolution of the image pickup element in the primary scanning direction.

### BRIEF DESCRIPTION OF THE DRAWINGS

The above and other objects and advantages of the present invention will become more apparent by describing in detail preferred embodiments thereof with reference to the accompanying drawings, wherein:
Fig. 1 is a schematic diagram showing a color image pickup element of an image reader according to a first embodiment of the present invention;
Fig. 2 is a schematic diagram showing the image reader according to the first embodiment;
Fig. 3 is a block diagram showing the functional configuration of the image reader according to the first embodiment;
Fig. 4 is a block diagram showing an image processing section of the image reader according to the first embodiment;
Fig. 5 is a block diagram showing an image processing section of an image reader according to a second embodiment of the present invention; and
Fig. 6 is a schematic diagram showing a color image pickup element of an image reader of a comparative example.

### DETAILED DESCRIPTION OF THE PREFERRED EMBODIMENTS

A plurality of preferred embodiments representing modes for implementing the present invention will be described hereinbelow with reference to the accompanying drawings.

### 1. First Embodiment

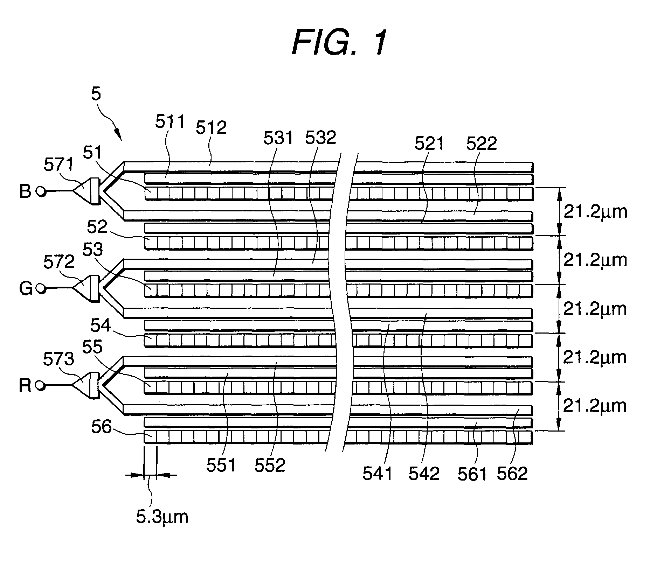

Figs. 1 through 4 show a first embodiment in which the present invention is applied to a flatbed image reader of movable carriage type.

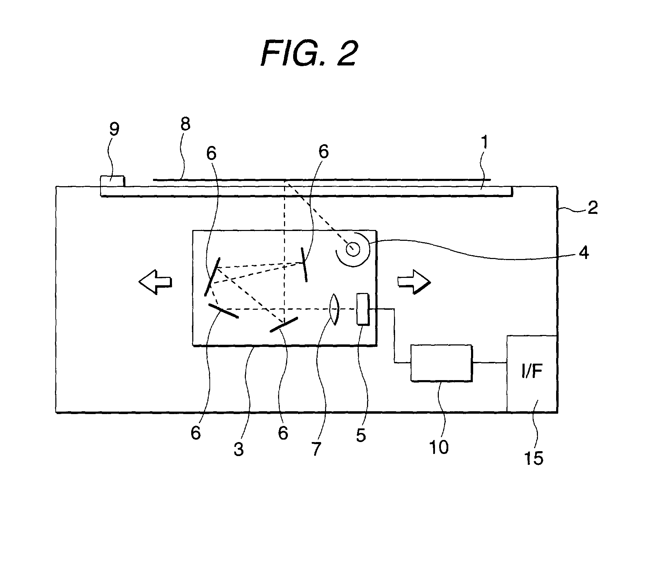

As shown in Fig. 2, an original table 1 having a transparent plate such as glass is disposed on top of a housing 2. Provided in the housing 2 is a carriage 3 which can move back and forth in parallel with the original table 1 by an unillustrated drive device. A light source 4 and a color image pickup element 5 are mounted on the carriage 3. Exposing light originating from the light source 4 is reflected from the surface of an original 8 placed on the original table 1. After having been reflected by a plurality of mirrors 6, the light is gathered on the color image pickup element 5 by a light-gathering lens 7. The color image pickup element 5 converts red (R) light, green (G) light, and blue (B) light into respective electric signals, and outputs the thus-converted electric signals. An optical path length extending from the original 8 to the light-gathering lens 7 is elongated through reflection effected by the plurality of mirrors 6 better. A white reference 9 having a uniform reflection surface of high reflectivity is provided at one end of the original table 1 in the traveling direction of the carriage 3.

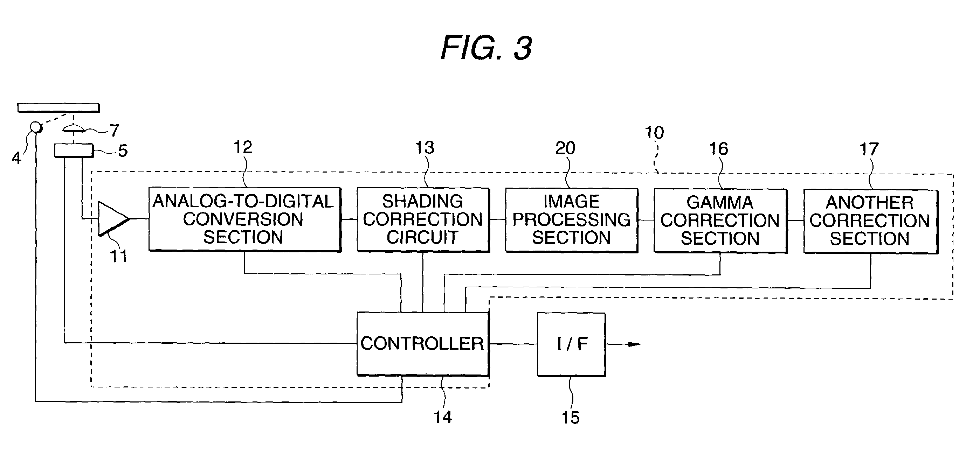

Fig. 3 is a block diagram showing the functional configuration of the image reader having the foregoing construction.

As shown in Fig. 3, a controller 14 is constructed of a microcomputer comprising a CPU, RAM, and ROM. The controller 14 is connected to an external image processing device; e.g., a personal computer, by way of an interface 15. In accordance with an instruction signal output from the image processing device, there are effected control of a time during which electric charges are accumulated in the color image pickup element 5 and selection of a gamma function to be used for gamma correction operation to be described later.

An analog-to-digital conversion section 12 converts data―which have been received from the color image pickup element 5 by way of an amplifier 11―into a digital signal and transfers the thus-converted data to a shading correction section 13. When a reading tone corresponds to ten bits, a signal assumes a numerical value ranging from 0 to 1023. The shading correction section 13 corrects variations in sensitivity or variations in light quantity of the light source 4 for each of photoelectric transducers arranged in a row, through use of the data which have been obtained by reading the white reference 9 before commencement of a reading operation. Pixel data which have been subjected to shading correction are delivered to an image processing section 20. The pixel data which have been subjected to averaging operation in the image processing section 20 are sent to a gamma correction section 16. The gamma correction section 16 effects gamma correction operation by a predetermined gamma function, thereby converting a light quantity signal output from the image processing section 20 into an image signal. Another correction section 17 performs various conversion operations, such as color correction, edge enhancement, and reduction/enhancement of a field.

As shown in Fig. 1, the color image pickup element 5 comprises a group of image pickup elements for reading B light (often called an "image pickup element group B"), a group of image pickup elements for reading G light (often called an "image pickup element group G"), and a group of image pickup elements for reading R light (often called an "image pickup element group R"). The image pickup element group B further comprises a first photoelectric transducer row 51 serving as a first element row and a second photoelectric transducer row 52 serving as a second element row. Similarly, the image pickup element group G further comprises a first photoelectric transducer row 53 serving as a first element row and a second photoelectric transducer row 54 serving as a second element row. The image pickup element group R further comprises a first photoelectric transducer row 55 serving as a first element row and a second photoelectric transducer row 56 serving as a second element row. In each of the element rows 51, 52, 53, 54, 55, and 56, a plurality of image pickup elements, such as photoelectric transducers, are linearly arranged at right angles to the traveling direction of the carriage 3 shown in Fig. 2. In the present embodiment, each of the image pickup elements has the shape of a square measuring 5.3µm by 5.3µm. Hence, each of the photoelectric transducer rows 51 through 56 assumes a width of 5.3µm. In the image pickup element group B, the first photoelectric transducer row 51 and the second photoelectric transducer row 52 are arranged such that respective image pickup elements match in position with reference to the primary scanning direction. Similarly, in the image pickup element group G, the first photoelectric transducer row 53 and the second photoelectric transducer row 54 are arranged such that respective image pickup elements match in position in the primary scanning direction. Further, in the image pickup element group R, the first photoelectric transducer row 55 and the second photoelectric transducer row 56 are arranged such that respective image pickup elements match in position in the primary scanning direction.

The first photoelectric transducer row 51 and the second photoelectric transducer row 52 belonging to the image pickup element group B, the first photoelectric transducer row 53 and the second photoelectric transducer row 54 belonging to the image pickup element group G, and the first photoelectric transducer row 55 and the second photoelectric transducer row 56 belonging to the image pickup element group R are spaced a pitch of 21.2µm, wherein the pitch is four times the height of an image pickup element or corresponds to the total width of four photoelectric transducer rows. Moreover, the second photoelectric transducer row 52 of the image pickup element group B and the first photoelectric transducer row 53 of the image pickup element group G are spaced from each other by a pitch corresponding to the total width of four photoelectric transducer rows. Similarly, the second photoelectric transducer row 54 of the image pickup element group G and the first photoelectric transducer row 55 of the image pickup element group R are spaced from each other by a pitch corresponding to the total width of four photoelectric transducer rows. Accordingly, the six photoelectric transducer rows 51 through 56 are spaced apart from each other at a pitch corresponding to the total width of four photoelectric transducer rows.

In synchronism with a drive signal produced at predetermined intervals, the electric charges accumulated in the respective photoelectric transducer rows 51 through 56 are transferred to a shift register 512 by way of a transfer gate 511, to a shift register 522 by way of a transfer gate 521, to a shift register 532 by way of a transfer gate 531, to a shift register 542 by way of a transfer gate 541, to a shift register 552 by way of a transfer gate 551, and to a shift register 562 by way of a transfer gate 561. In each of the photoelectric transducer rows, accumulation of electric charges induced by the light reflected from the next line to be read is started. The electric charges that have been transferred to the respective shift registers 512, 522, 532, 542, 552, and 562 are output from output sections 571, 572, and 573 for each element.

In the first embodiment, the photoelectric transducer rows are assembled so as to able to read the original 8 at a resolution of 900 dpi (dot per inch) in the primary scanning direction. With regard to B light, the color image pickup element 5 can read one line at a resolution of 900 dpi, by merging the pixel data read by the first photoelectric transducer row 51 and the pixel data read by the second photoelectric transducer row 52 when the carriage 3 has moved from the first photoelectric transducer row 51 by only a distance corresponding to the total width of four photoelectric transducer rows. With regard to G light, the color image pickup element 5 can read one line at a resolution of 900 dpi, by merging the pixel data read by the first photoelectric transducer row 53 and the pixel data read by the second photoelectric transducer row 54 when the carriage 3 has moved from the first photoelectric transducer row 53 by only a distance corresponding to the total width of four photoelectric transducer rows. With regard to R light, the color image pickup element 5 can read one line at a resolution of 900 dpi, by merging the pixel data read by the first photoelectric transducer row 55 and the pixel data read by the second photoelectric transducer row 56 when the carriage 3 has moved from the first photoelectric transducer row 55 by only a distance corresponding to the total width of four photoelectric transducer rows.

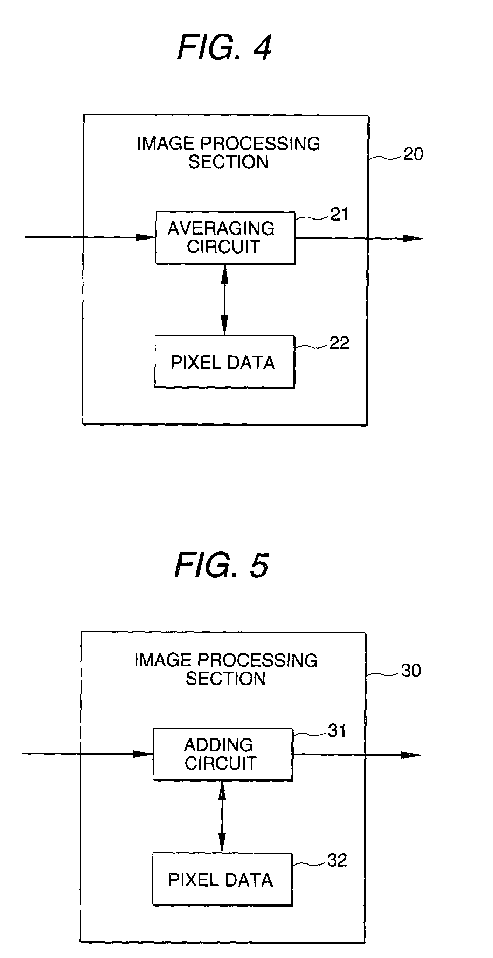

As shown in Fig. 4, the image processing section 20 comprises an averaging circuit 21 serving as averaging means and memory 22 which serves as pixel data storage means for storing pixel data.

The memory 22 is for storing pixel data that have been converted from analog data into digital data. The averaging circuit 21 is for averaging a plurality of pixel data sets which are stored in the memory 22 and correspond to the same position on each line with reference to the direction in which image pickup elements of the respective photoelectric transducer rows are arranged. By the pixel data read by the first photoelectric transducer rows 51, 53, and 55 and the pixel data read by the second photoelectric transducer rows 52, 54, and 56, a region―which would be read by a single pixel of a color image pickup element having one row of photoelectric transducers―is read by two pixels located at the same position on each line with reference to the primary scanning direction.

The operation of the thus-constructed image reader will now be described.

A user connects an unillustrated personal computer to the interface 15 of the image reader. While the original 8 is placed on the original table 1, a field for reading on the original 8 and a read resolution are specified by way of the personal computer, and execution of reading operation is instructed.

When execution of reading operation is instructed, the controller 14 causes the light source 4 to illuminate and moves the carriage 3 at a constant speed in the direction perpendicular to the direction in which image pickup elements of each of the photoelectric transducer rows are arranged. An image for one line is read by the respective photoelectric transducer rows 51 through 56 of the color image pickup element 5, in accordance with a drive signal produced at every predetermined time interval. The thus-read image is output to the signal processing section 10. A reading resolution in the secondary scanning direction is determined on the basis of a time required for each photoelectric transducer row to read one line and the traveling speed of the carriage 3. For instance, when the carriage 3 moves a distance corresponding to the width of only one photoelectric transducer row every time one line of the original 8 is read, the original 8 can be read in the secondary scanning direction at a resolution of 900 dpi.

The analog pixel data output from the first photoelectric transducer rows 51, 53, and 55 and those output from the second photoelectric transducer rows 52, 54, and 56 are converted into digital pixel data by an analog-to-digital converter section 12. The pixel data that have been subjected to shading correction in the shading correction section 13 are stored in the memory 22. The averaging circuit 21 averages the pixel data read by the first photoelectric transducer rows 51, 53, and 55 and the pixel data read by the second photoelectric transducer rows 52, 54, and 56, the latter pixel data pertaining to the same line that has been read by the first photoelectric transducer rows. Consequently, pixel data pertaining to two pixels located at the same position on a single line with reference to the primary scanning direction are averaged. Subsequently, the thus-averaged image data are delivered to the gamma correction section 16.

In the image processing section 20, there are performed averaging of pixel data pertaining to 1^{st}, 2^{nd}, 3^{rd}, ... n^{th} pixels read by the first photoelectric transducer rows 51, 53, and 55 and pixel data pertaining to 1^{st}, 2^{nd}, 3^{rd}, ... n^{th} pixels read by the second photoelectric transducer rows 52, 54, and 56. Pixel data pertaining to two pixels located at the same location on each line with reference to the primary scanning direction are averaged sequentially. Thus, noise components of the respective pixels can be removed, thereby improving picture quality.

A noise level of averaged image data is reduced to 1/√2 a noise level of unaveraged image data. Reduction of a noise level is particularly effective for image data pertaining to a dark section in which a gamma function used by the gamma correction section 16 assumes a steep slope.

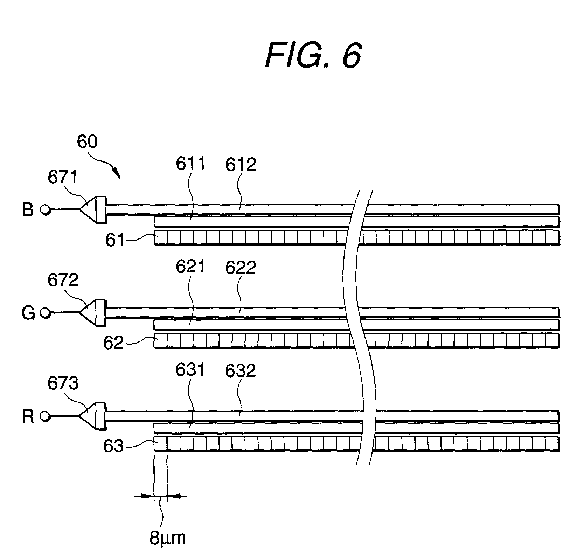

Next will be described, with reference to Fig. 6, Comparative Example 1 in which the color image pickup element 5 shown in Fig. 1 is formed from a row of photoelectric transducers.

As shown in Fig. 6, a color image pickup element 60 comprises a group of image pickup elements for reading B light (often called an "image pickup element group B"), a group of image pickup elements for reading G light (often called an "image pickup element group G"), and a group of image pickup elements for reading R light (often called an "image pickup element group R"). The image pickup element group B further includes a photoelectric transducer row 61 comprising a plurality of image pickup elements, such as photoelectric transducers, linearly arranged at right angles to the traveling direction of the carriage 3. Similarly, the image pickup element group G further includes a photoelectric transducer row 62 comprising a plurality of image pickup elements, such as photoelectric transducers, linearly arranged at right angles to the traveling direction of the carriage 3. The image pickup element group R further includes a photoelectric transducer row 63 comprising a plurality of image pickup elements, such as photoelectric transducers, linearly arranged at right angles to the traveling direction of the carriage 3.

In synchronism with a drive signal produced at predetermined intervals, the electric charges accumulated in the respective photoelectric transducer rows 61 through 63 are transferred to a shift register 612 by way of a transfer gate 611, to a shift register 622 by way of a transfer gate 621, and to a shift register 632 by way of a transfer gate 631. In each of the photoelectric transducer rows 61 through 63, accumulation of electric charges induced by the light reflected from the next line to be read is started. The electric charges that have been transferred to the respective shift registers 612, 622, and 632 are output from output sections 671, 672, and 673 for each element.

In Comparative Example 1, each of the image pickup elements assumes the shape of a square measuring 8µm by 8µm. Hence, each of the photoelectric transducer rows 61 through 63 assumes a width of 8µm. A light-receiving area of each pixel is 64µm². The color image pickup element 60 is identical in geometry with the color image pickup element 5 according to the present embodiment shown in Fig. 1.

In the first embodiment, a light-receiving area of one pixel is defined as 28µm² = 5.3µm x 5.3µm. The resolution of the color image pickup element 5 according to the first embodiment with reference to the primary scanning direction is 1.5 times (= 8µm/5.3µm) the resolution of the image pickup element 60 according to Comparative Example 1 with reference to the primary scanning direction. The sensitivity of the image pickup element 5 according to the first embodiment is 43.8% (28µm/64µm) of that of the image pickup element 60 according to Comparative Example 1. In the first embodiment, the resolution of the color image pickup element 5 can be improved in both the primary and secondary scanning directions without involvement of upscaling.

In the first embodiment that has been described above, digitally-converted pixel data are stored in the memory 22. By the pixel data read by the first photoelectric transducer rows 51, 53, and 55 and the pixel data read by the second photoelectric transducer rows 52, 54, and 56, pixel data pertaining to two pixels located at the same location on each line with reference to the primary scanning direction are averaged. Accordingly, the resolution of the image pickup element 5 is improved, and noise components of each of the pixels are reduced, thus improving a signal-to-noise ratio. Consequently, picture quality can be improved by employment of a simple configuration without involvement of an increase in costs.

In the first embodiment, a region to be averaged corresponds to a mean value obtained by averaging the pixel data read by the first photoelectric transducer rows 51, 53, and 55 and the pixel data read by the second photoelectric transducer rows 52, 54, and 56. The resultant resolution becomes equal to reading resolution of a color image pickup element having a single row of image pickup elements in the primary scanning direction. Consequently, noise components can be diminished without involvement of a reduction in resolution of the image pickup element in the primary scanning direction.

### 2. Second Embodiment

Fig. 5 shows a second embodiment of the present invention. The second embodiment is identical with the first embodiment, except that the averaging circuit 21 described in connection with the first embodiment shown in Fig. 4 is changed to an addition circuit.

As shown in Fig. 5, an image processing section 30 is made up of an addition circuit 31 serving as addition means and memory 32 serving as pixel data storage means for storing pixel data.

The memory 32 is for storing pixel data that have been converted from analog data into digital data. The addition circuit 31 is for subjecting to addition a plurality of pixel data sets which are stored in the memory 32 and are located at the same position on each line with reference to the direction in which image pickup elements of each of the photoelectric transducer rows 61 through 63 are arranged. By the pixel data read by the first photoelectric transducer rows 51, 53, and 55 and the pixel data read by the second photoelectric transducer rows 52, 54, and 56, a region―which would be read by a single pixel of a color image pickup element having one row of photoelectric transducers―is read by two pixels located at the same position on each line with reference to the primary scanning direction.

In the second embodiment, the analog pixel data output from the first photoelectric transducer rows 51, 53, and 55 and those output from the second photoelectric transducer rows 52, 54, and 56 are converted into digital pixel data by an analog-to-digital converter section 12. The pixel data that have been subjected to shading correction in the shading correction section 13 are stored in the memory 32. The addition circuit 31 subjects to addition the pixel data read by the first photoelectric transducer rows 51, 53, and 55 and the pixel data read by the second photoelectric transducer rows 52, 54, and 56, the latter pixel data pertaining to the same line that has been read by the first photoelectric transducer rows. Consequently, pixel data pertaining to two pixels located at the same position on a single line with reference to the primary scanning direction are added. Subsequently, the thus-added image data are delivered to the gamma correction section 16.

In the image processing section 30, pixel data pertaining to 1^{st}, 2^{nd}, 3^{rd}, ... n^{th} pixels read by the first photoelectric transducer rows 51, 53, and 55 are added to pixel data pertaining to 1^{st}, 2^{nd}, 3^{rd}, ... n^{th} pixels read by the second photoelectric transducer rows 52, 54, and 56. Pixel data pertaining to two pixels located at the same location on each line with reference to the primary scanning direction are added sequentially. As a result, the image data that have been subjected to addition come to have sensitivity twice that of image data which have not been subjected to addition.

In contrast with the first embodiment shown in Fig. 1, a light-receiving area of one pixel is defined as 56µm² = 5.3µm x 5.3µm x 2 in the second embodiment. The resolution of the color image pickup element according to the second embodiment with reference to the primary scanning direction is 1.5 times (= 8µm/5.3µm) the resolution of the image pickup element 60 according to Comparative Example 1 shown in Fig. 6 with reference to the primary scanning direction. The resolution of the image pickup element according to the second embodiment in the secondary scanning direction is 1.5 times (= 8µm/5.3µm) the resolution of the image pickup element 60 according to Comparative Example 1 with reference to the secondary scanning direction. The sensitivity of the image pickup element according to the second embodiment is 87.8% (= 56µm²/64µm²) the sensitivity of the image pickup element 60 according to Comparative Example 1. In the second embodiment, the resolution of the color image pickup element can be improved in both the primary and secondary scanning directions without involvement of upscaling while deterioration of sensitivity of pixels is prevented.

In the second embodiment that has been described above, digitally-converted pixel data are stored in the memory 32. By the pixel data read by the first photoelectric transducer rows 51, 53, and 55 and the pixel data read by the second photoelectric transducer rows 52, 54, and 56, pixel data pertaining to two pixels located at the same location on each line with reference to the primary scanning direction are added together. Accordingly, the resolution of the image pickup element is improved, and degradation of sensitivity of pixels can be prevented. Consequently, picture quality can be improved by employment of a simple configuration without involvement of an increase in costs.

In the second embodiment, a region to be added corresponds to the result of addition of the pixel data read by the first photoelectric transducer rows 51, 53, and 55 to the pixel data read by the second photoelectric transducer rows 52, 54, and 56. The resultant resolution becomes equal to reading resolution of a color image pickup element having a single row of image pickup elements in the primary scanning direction. Consequently, noise components can be diminished without involvement of a reduction in resolution of the image pickup element in the primary scanning direction.

In the previously-described embodiments of the present invention, the present invention has been applied to an image pickup device comprising an image pickup element group B, an image pickup element group G, and an image pickup element group R, each group comprising two rows of photoelectric transducers. By pixel data read by a first photoelectric transducer row and pixel data read by a second photoelectric transducer row, pixel data pertaining to two pixels located at the same position on each line with reference to a primary scanning direction are subjected to averaging or addition. Even when each of the image pickup element groups comprises three, four or more rows of photoelectric transducers, pixel data pertaining to a plurality of pixels located at the same position on each line with reference to a primary scanning direction are subjected to averaging or addition, by use of pixel data read by respective photoelectric transducer element rows. As a result, noise components of pixels in the primary scanning direction can be diminished.

In the embodiments, the image processing section is disposed subsequent to the shading correction section; however, in the present invention, the image processing section may be provided prior to the shading correction section.

In the embodiments, an output section is provided for each of the image pickup element groups B, G, and R. However, in the present invention, an output section may be provided for each of photoelectric transducer rows.

In the embodiments, the photoelectric transducer rows are disposed at a pitch corresponding to the total width of four photoelectric transducer rows. However, the photoelectric transducer rows can be disposed at an arbitrary pitch.

In the embodiments, the present invention has been applied to the flatbed image reader of movable carriage type. However, the present invention can also be applied to a flatbed image reader of movable mirror type, wherein a color image pickup element and a light-gathering lens are fixed and a light source and reflection mirrors are moved. Alternatively, the present invention can also be applied to an image reader of another type, such as a sheet feeder type, which reads an original while moving the same.

It is contemplated that numerous modifications may be made to the color image pickup element, the image reader using the color image pickup element, and the image reading method, of the present invention without departing from the spirit and scope of the invention as defined in the following claims.

## Claims

1. A color image pickup element; comprising:
groups of image pickup elements provided for a plurality of colors, each image pickup element group including a plurality of image pickup elements linearly arranged in rows on a substrate,
**characterized in that**
a row of image pickup elements in each image pickup element group and another row of image pickup elements in the same image pickup element group are arranged such that respective image pickup elements match in position in a direction in which the image pickup elements are arranged.

2. The color image pickup element according to claim 1, **characterized in that** the groups of image pickup elements are provided so as to correspond to a red color, a green color, and a blue color.

3. An image reader **characterized by** comprising:
a color image pickup element according to claim 1 or 2;
a plurality of mirrors for reflecting light which has been emitted from a light source and reflected from or passed through the surface of an original; and
a light-gathering lens for gathering the light reflected from the mirrors on the color image pickup element.

4. The image reader according to claim 3,
**characterized by** further comprising:
an analog-to-digital conversion section for subjecting to analog-to-digital conversion pixel output data from the color image pickup element;
pixel data storage means for storing the pixel data that have been subjected to analog-to-digital conversion by the analog-to-digital converter; and
averaging means for subjecting to averaging operation a plurality of pixel data sets which are stored in the pixel data storage means, have been read at different times from the same position with reference to a direction in which image pickup elements of the respective image pickup element rows are arranged, and outputs a result of averaging operation as one set of pixel data.

5. The image reader according to claim 3,
**characterized by** further comprising:
an analog-to-digital conversion section for subjecting to analog-to-digital conversion pixel output data from the color image pickup element;
pixel data storage means for storing the pixel data that have been subjected to analog-to-digital conversion by the analog-to-digital converter; and
addition means for subjecting to adding operation a plurality of pixel data sets which are stored in the pixel data storage means, have been read at different times from the same position with reference to a direction in which image pickup elements of the respective image pickup element rows are arranged, and outputs a result of adding operation as one set of pixel data.

6. An image reading method performed by the image reader recited in claim 3, **characterized by** comprising:
an analog-to-digital conversion step for subjecting to analog-to-digital conversion pixel data output from the color image pickup element;
a pixel data storage step for storing pixel data which have been subjected to analog-to-digital conversion by the analog-to-digital conversion section; and
an averaging step for subjecting to averaging operation a plurality of pixel data sets which are stored in the pixel data storage means, have been read at different times from the same position with reference to a direction in which image pickup elements of the respective image pickup element rows are arranged, and outputs a result of averaging operation as one set of pixel data.

7. An image reading method performed by the image reader recited in claim 3, **characterized by** comprising:
an analog-to-digital conversion step for subjecting to analog-to-digital conversion pixel data output from the color image pickup element;
a pixel data storage step for storing pixel data which have been subjected to analog-to-digital conversion by the analog-to-digital conversion section; and
an addition step for subjecting to adding operation a plurality of pixel data sets which are stored in the pixel data storage means, have been read at different times from the same position with reference to a direction in which image pickup elements of the respective image pickup element rows are arranged, and outputs a result of adding operation as one set of pixel data.
